# EUROPEAN PATENT SPECIFICATION

(11) **EP 2 003 754 B1**
(45) Date of publication and mention of the grant of the patent: **09.11.2011**
(21) Application number: 07425371.7
(22) Date of filing: 14.06.2007
(51) Int. Cl.: H02B 1/052, H01R 9/26

(54) **Modular electrical apparatus with a rail hook-up device**
Modulares elektrisches Gerät mit Vorrichtung zum Festklammern an eine Schiene
Appareil électrique du type modulaire avec un dispositif d'accrochage sur rail

(43) Date of publication of application: 17.12.2008
(73) Proprietor: Bticino S.p.A., 20154 Milano (IT)
(72) Inventor: De Cherubini, Sergio, 21100 Varese (IT)
(74) Representative: Carangelo, Pierluigi

(56) References cited:
- EP-A- 1 742 315
- EP-A1- 0 326 624
- EP-A1- 0 437 124
- EP-A1- 0 951 097
- US-A1- 2003 143 896

## Description

The present invention refers to the technical field of modular electrical apparatuses and in particular concerns a modular electrical apparatus equipped with a rail hook-up device.

Already for some time modular electrical apparatuses intended to be installed side-by-side on a rail of metallic profile have been known. To attach electrical apparatuses to the rail it is known to provide a housing recess suitable for partially receiving the rail on a rear face of the electrical apparatuses. Such a recess is typically provided on one side with a fixed hook-up tooth and on the opposite side with a mobile hook-up tooth. The latter can be moved with respect to the fixed hook-up tooth between a withdrawn operating position and an advanced operating position. Typically, the mobile hook-up tooth forms part of a slider housed so that it can slide in a suitable seat foreseen in the electrical apparatus. In the advanced operating position both of the hook-up teeth cooperate with opposite attachment edges of the rail, ensuring the attachment of the electrical apparatus to it. An electrical apparatus of this type is for example described in European patent EP 0 680 114.

It has been observed that in some cases the presence of a single hook-up tooth makes it difficult to apply and/or remove the electrical apparatus to/from the rail. For this reason modular electrical apparatuses have been developed provided with two opposite mobile hook-up teeth that can be actuated independently from each other to take up an advanced operating position and a withdrawn operating position.

This type of solution is now widely used, but it does take longer to install and remove than the solution with a single hook-up tooth, since it is typically necessary to act in succession on the two hook-up teeth.

Electrical apparatuses comprising a rail hook up device provided with a simultaneous actuation mechanism of the two hook-up teeth are already known from : EP-A-1742315 (on which the preamble of claim 1 is based), US 2003/143896, EP-A-0 326 624, EP-A-0951097 and EP-A-0437124.

The purpose of the present invention is to provide a modular electrical apparatus that, with respect to the apparatuses described above with reference to the prior art, can be fixed or removed to/from a rail efficiently, easily and quickly.

Such a purpose is accomplished through an electrical apparatus as defined in the attached first claim in its most general form and in the dependent claims in its special embodiments.

The invention shall be better understood from the following detailed description of a particularly preferred embodiment thereof, made as an example and therefore in no way limiting in relation to the attached drawings, in which:
- figure 1 shows a particularly preferred embodiment of an electrical apparatus in accordance with the present invention, in which the electrical apparatus is coupled with a rail through a hook-up device;
- figure 2 shows the electrical apparatus of figure 1 with the hook-up device in a first operating configuration;
- figure 3 shows a component of the hook-up device of the electrical apparatus of figure 1;
- figure 4 shows a further component of the hook-up device of the electrical apparatus of figure 1;
- figure 5 shows an enlarged detail of the electrical apparatus of figure 1;
- figure 6a shows a side view of the hook-up device in the operating configuration of figure 1;
- figure 6b shows a further view of the hook-up device in the operating configuration of figure 1;
- figure 7a shows a side view of the hook-up device in a second operating configuration; and
- figure 7b shows a further view of the hook-up device in the operating configuration of figure 7a.

In the figures, identical or similar elements shall be indicated with the same reference symbols.

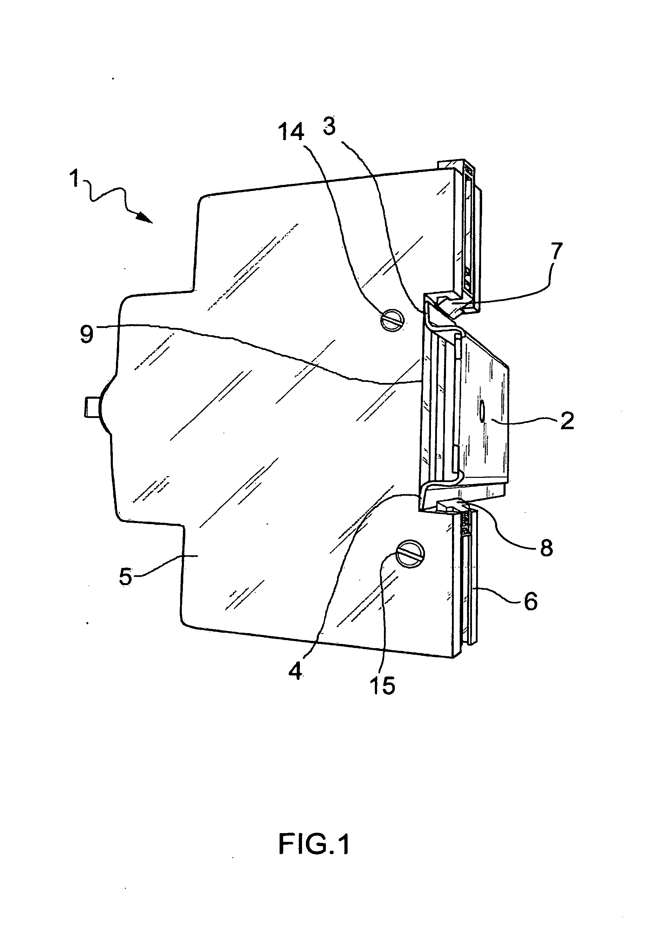

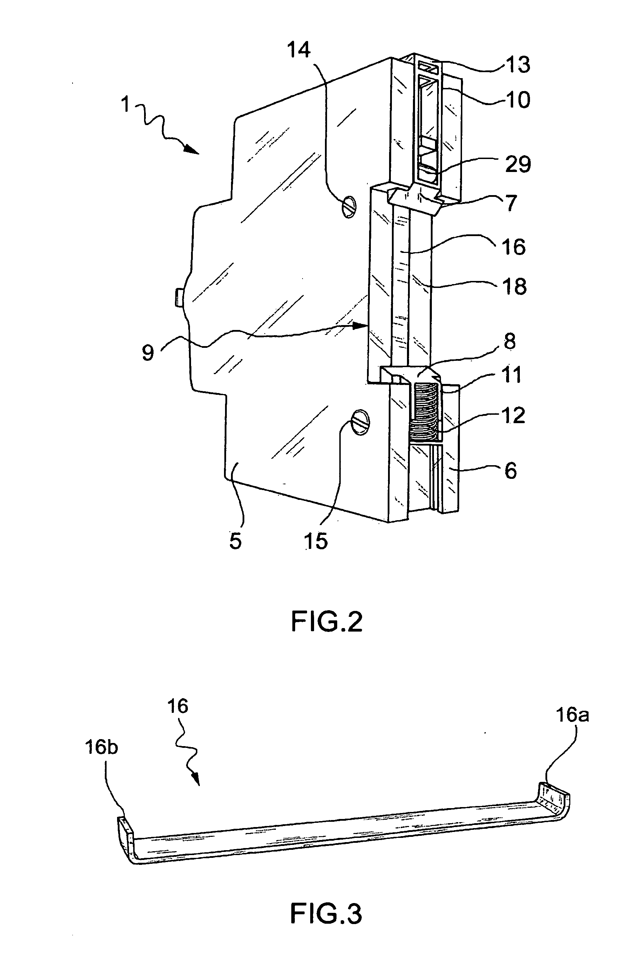

With reference to figures 1 and 2 a particularly preferred non-limiting example embodiment of a modular electrical apparatus in accordance with the present invention is shown, globally indicated with 1. The modular electrical apparatus 1, which is for example a switch intended for use in electrical panels or switchboards, comprises an insulating body 5, 6 formed from two half-shells 5, 6 coupled together through locking means, like for example screws 14, 15. The insulating body 5, 6 houses electrical and/or electromechanical devices inside it, not shown in the figures.

The rear face of the box-shaped body constitutes an apparatus back intended in use to be placed over an apparatus-carrying rail 2. The apparatus-carrying rail 2 is a bar made from metallic profile and in the particular example illustrated in figure 1 has an hat-shaped profile, including two longitudinal attachment edges 3, 4. For example, the rail 2 is a standard rail made in accordance with DIN specifications.

To attach the electrical apparatus 1 to the rail 2 a housing recess 9 is foreseen in the body of the apparatus 1 arranged at the back of the electrical apparatus 1 and suitable for receiving a portion of rail 2. The housing recess 9 has a base wall 18, easiest to see in figure 2, which represents a recessed portion of the back of the electrical apparatus 1.

As can be seen in figure 2, the back of the electrical apparatus 1 is equipped with a hook-up device 10, 11 comprising two sliders 10, 11 slidably housed in respective grooved seats formed between the two half-shells 5, 6 and arranged on opposite sides with respect to the housing recess 9.

Each of the two sliders 10, 11 has a respective end portion facing the side of the recess 9 shaped like a hook-up tooth 7, 8 suitable for cooperating with a respective attachment edge 3, 4 of the rail 2. Each of the two sliders 10, 11 can be actuated to be moved between an advanced operating position and a withdrawn operating position and vice-versa. Each of the two sliders 10, 11 is preferably made from electrically insulating plastic material.

When both of the sliders 10, 11 are in the advanced operating position, the two opposite hook-up teeth 7, 8 take up a position proximal to each other and each of them cooperates with a respective attachment edge 3, 4 of the rail 2. In this situation, the hook-up device 10, 11 in practice takes up an operating configuration, represented in figures 1 and 2 and known as "hook-up", in which this is such as to keep the electrical apparatus 1 fixedly connected to the rail 2.

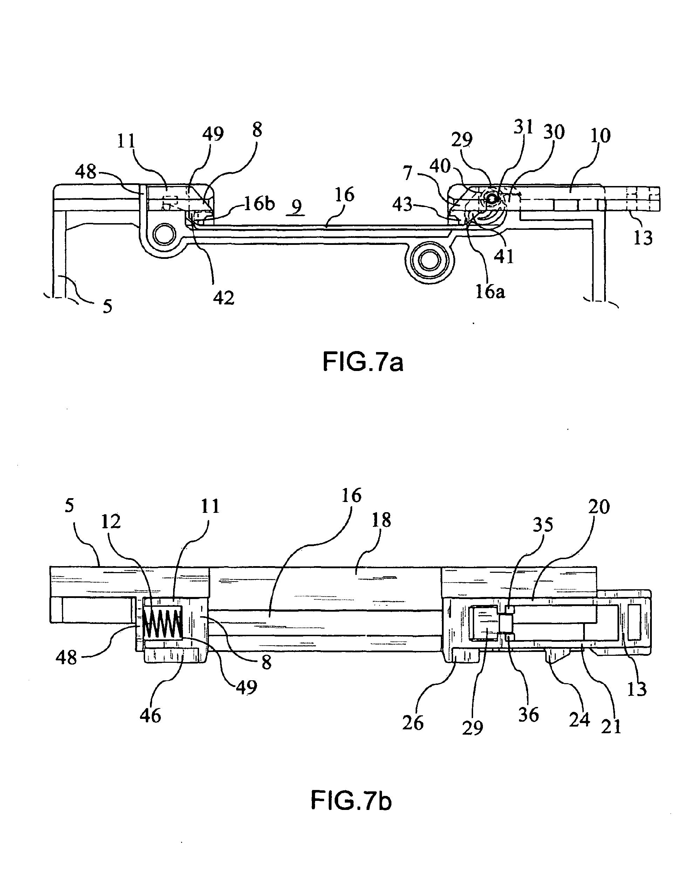

On the other hand, when each of the two sliders 10, 11 is in withdrawn position, the two opposite hook-up teeth 7, 8 take up a position distal from each other, for example withdrawing into the seats of the respective sliders 10, 11, and each of them does not interfere with the respective attachment edge 3, 4 of the rail 2. In this situation the hook-up device 10, 11 takes up an operating configuration, represented in figures 7a and 7b and known as "release" or "unhooking", in which the electrical apparatus 1 is fixedly connected/detachable to/from the rail 2.

With reference to figure 2, according to the invention, the hook-up device 10, 11 also includes a simultaneous actuation mechanism 16, 12, 29 of the two sliders 10, 11 operating so that the actuation of a predetermined slider, or main slider 10, from the two sliders 10, 11 is such as to also cause the actuation of the other slider 11, or secondary slider 11.

In the example described, the main slider 10 is equipped on the side opposite its hook-up tooth 7 with a projecting end portion 13, or gripping end 13, which represents a gripping element through which the main slider 10 can be actuated manually or by means of a tool.

In an electrical apparatus 1 in accordance with the present invention, thanks to the presence of the simultaneous actuation mechanism, if the main slider 10, by acting upon the projecting end portion 13, is actuated to be moved from the withdrawn position to the advanced position, the secondary slider 11 is also simultaneously moved between the withdrawn position and the advanced position, automatically taking the hook-up device into the operating hooked-up configuration. Vice-versa, if the main slider 10, by acting upon the projecting end portion 13, is moved from the advanced position to the withdrawn position, the secondary slider 11 is also simultaneously moved between the advanced position and the withdrawn one, automatically taking the hook-up device into the operating release configuration.

Preferably, the simultaneous actuation mechanism 16, 12, 29 includes mechanical connection means 16 between the two sliders 10, 11 that, crossing the recess 9 along the base wall 18 thereof, extend between the first 10 and the second slider 11.

Preferably, the mechanical connection means include a connection bar 16 that extends between the first 10 and the second slider 11 and able to slide along said base wall 18. Advantageously, the connection bar 16, shown in figure 3, is made from metallic material, and more preferably is made from sheet-steel. In a particularly advantageous embodiment, the connection bar 16 has two end portions 16a, 16b bent, preferably at a right angle, with respect to the main direction of extension of the bar 16. Such end portions 16a, 16b are foreseen to allow the cooperation by interference of the bar with the sliders 10, 11.

In a particularly preferred embodiment, the base wall 18 of the recess 9 includes a suitable groove suitable for slidably receiving the connection bar 16. More preferably, the groove of the base wall 18 is of a depth sufficient to ensure that the bar 16 is flush with the base wall 18.

In a particularly preferred embodiment, the simultaneous actuation mechanism 16, 12, 29 also includes elastic means, like for example a helical spring 12, suitable for pushing the secondary slider 11 into the advanced position reacting in contrast with a wall of the body of the electrical apparatus 1. In this particular embodiment, when the main slider 10 is in the advanced position, the connection bar 16 is unable to counteract the elastic force of the spring 12, for which reason the secondary slider 11 is also in the advanced position and the hook-up device is in the operating hook-up position represented in figure 2. On the other hand, by acting upon the end portion 13 and taking the main slider 10 into the withdrawn operating position, this, through a kinematic mechanism that shall be illustrated in greater detail hereafter, is such as to exert a thrusting force on the bar 16. Due to such thrusting, the bar 16 slides forwards towards the secondary slider 11 transmitting the thrust to the latter. Such a thrusting force, which is exerted by the bar 16 on the secondary slider 11 in contrast to the action of the spring 12, determines a backward sliding of the secondary slider 11, until the withdrawn position is reached. The hook-up device can therefore take up the operating release configuration, represented in figures 7a,7b, by actuating just the main slider 10.

Based upon what has been described above it is possible to imagine how the connection bar 16 represents a mechanical connection member kinematically coupled with the main slider 10 so as to be mobile in the opposite direction to the direction of movement of the main slider 10.

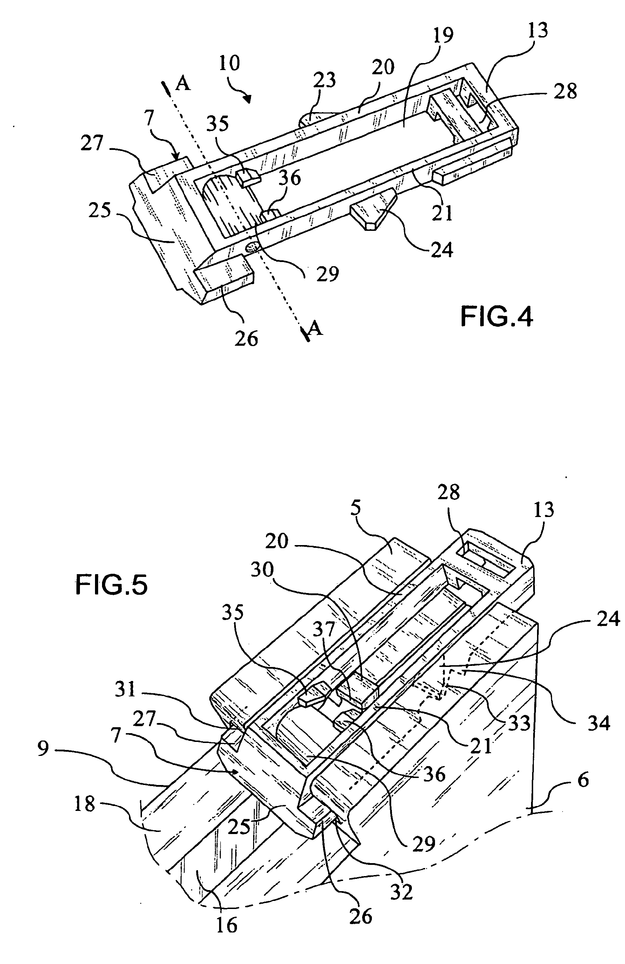

Figures 4 and 5 show the main slider 10 of the hook-up device of the electrical apparatus 1. As shown in such figures, the main slider 10 includes a first end portion carrying the hook-up tooth 7 and an opposite end portion constituting a gripping end 13. The gripping end 13 is equipped with a flattened opening 28 to allow the main slider 10 to be moved using a tool, for example a blade screwdriver.

In a particularly preferred embodiment, the hook-up tooth 7 has an interference entry ramp 25 and two tenons 26, 27 foreseen to cooperate with respective tracks 31, 32 arranged in the housing seat of the main slider 10 to allow guided sliding of the main slider 10 in its seat.

The main slider 10 has an elongated slit 19 defined between two shafts 20, 21 that extend parallel to one another. Each of the shafts 20, 21 is provided on its outer face with a respective holding tooth 23, 24 shaped substantially like a saw tooth. Each of such holding teeth 23, 23 is foreseen to selectively cooperate with two holding recesses that are spaced apart made in the seat housing the main slider 10 in order to lock the slider 10 in one of its advanced/withdrawn operating positions. The two holding recesses 33, 34 foreseen to cooperate with the holding tooth 24 are shown through a dashed line in figure 5. Two recesses of a totally analogous type and not shown in the figures are foreseen in the other half-shell 5 to cooperate with the holding tooth 23.

As is clear to a man skilled in the art, the distance between such holding recesses 33, 34 defines the stroke of the main slider 10. In the passage from the advanced operating position to the withdrawn operating position and vice-versa each of the holding teeth 23, 24 disengages from a respective holding recess determining an elastic deformation, and in practice a slight inflection, of the shafts 20, 21 towards the slit 19 to then engage with the other respective holding recess, in this way the other operating position being reached.

According to the invention, the main slider 10 comprises a thrusting member 29 that can rotate about a rotation axis A-A, and hinged to the two shafts 20, 21.

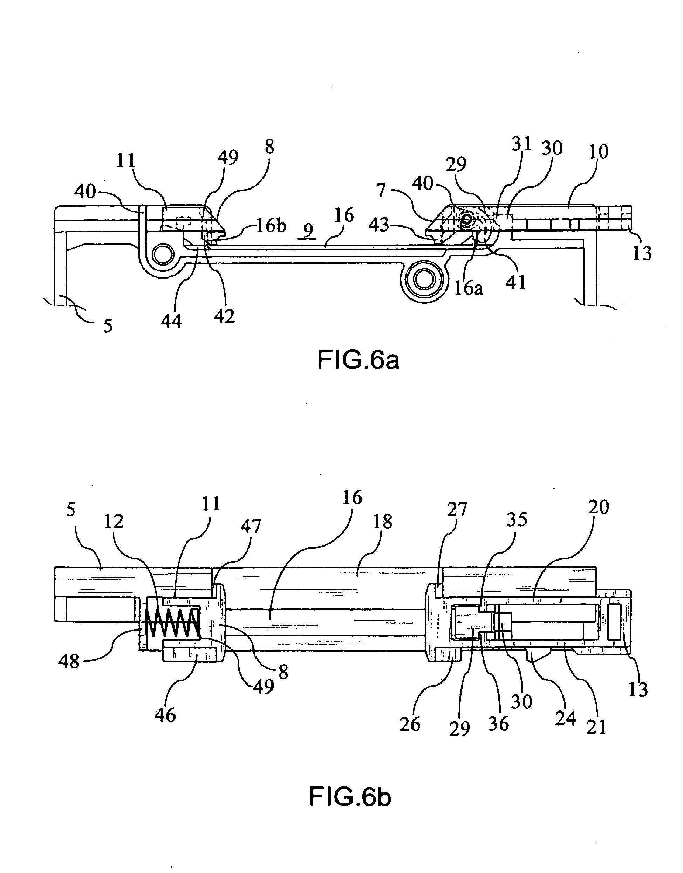

In the passage of the main slider 10 from the advanced operating position to the withdrawn position, the rotating thrusting member 29 is such as to exert a thrusting action on the bar 16 to counteract the action of the spring 12 and make the secondary slider 11 move towards its withdrawn position. In a particularly preferred embodiment, the main slider 10 also includes means 35, 36 suitable for limiting the angle of rotation of the rotating thrusting member 29, like for example two opposite small limit switch teeth 35, 36 foreseen on the shafts 20, 21 on the side thereof facing towards the slit 19. In a particularly preferred embodiment, the rotating thrusting member 29, able to be seen more clearly in figures 6a, 7a, is a curved tooth having an end portion 40 hinged to the main slider 10 and an opposite free end portion 41.

As can be seen in figure 5, the hook-up device also includes means suitable for imparting rotary motion to the curved tooth 29 following a linear movement of the slider 10, like for example a small block 30 firmly connected to the box-shaped body of the electrical apparatus 1 and in the example represented firmly connected to the half-shell 5, equipped with a projecting appendage 37 that in the passage of the main slider 10 from the advanced position to the withdrawn position interferes in abutment against a surface of the curved tooth 29 making it rotate.

Figure 6a represents a side view of a part of the electrical apparatus 1 from which the half-shell 6 has been removed for the sake of illustration. In the view represented in figure 6a the hook-up device is shown in the hooked-up configuration, the two sliders 10 and 11 are, indeed, in advanced position. Figure 6b shows a plan view of the back of the part of electrical apparatus 1 shown in figure 6a.

In the configuration of figures 6a and 6b, the secondary slider 11 is held in advanced position by the helical spring 12 (only visible in figure 6b), arranged between the wall 48 of the half-shell 5 and an opposite wall 49 of the secondary slider 11. As can be observed in figure 6b, the secondary slider 11 can be made with a very simple structure of the main slider 10. In the particular example described, not for limiting purposes, the secondary slider 11 is essentially U-shaped. Similarly to the main slider 10, the secondary slider is provided with two tenons 46, 47 foreseen to cooperate with respective tracks (not visible in the figures) arranged in the housing seat of the secondary slider 11.

The wall 49 of the secondary slider 11 has an end portion 42 that extends towards the base wall 18 of the recess 9 so as to interfere in abutment against the bent end portion 16b of the bar 16. In figure 6a it is also possible to see a portion of the housing recess 44 of the bar 16. The other bent end 16a of the bar 16 interferes in abutment against the free end 41 of the curved tooth 29, which is fixedly connected in the position of figure 6a due to the action of limit switch teeth 35, 36 that prevent it from rotating in the anti-clockwise direction under the action of the thrusting of the spring 12. In this way, the advanced position of the secondary slider 11 is brought about by the interference in abutment of the slider 11 with the end 16b of the bar 16.

Starting from the configuration represented in figures 6a, 6b, by exerting a traction force on the gripping end 13 of the main slider 10 along the direction of sliding of the slider 10, the appendage 31 of the small block 30 forces the curved tooth 29 to rotate in the clockwise direction, during which the end 41 of the tooth exerts a thrusting force on the bar 16. Such a bar 16 therefore slides towards the secondary slider 11 in contrast to the action of the helical spring 12, causing a compression of such a spring 12 and a withdrawal of the secondary slider 11, until the configuration represented in figures 7a and 7b has been reached, in which both of the sliders 10 and 11 are in withdrawn position and in which the spring 12 is compressed. In such a configuration, the main slider 10 is kept in position by the holding teeth 23, 24 (easier to see in figure 5) each of which cooperates with the respective holding recess 34 (one of which is visible in figure 5). In such a configuration, moreover, as can be seen in figure 7a, the connection bar 16 is locked in its position, since the bent end 16a is locked between the free end 41 of the curved tooth 29 and a wall 43 foreseen below the tooth 7 that projects towards the base wall 18 of the recess 9.

From what has been outlined it is clear that an electrical apparatus in accordance with the present invention is able to achieve the predetermined purpose described earlier with reference to electrical apparatuses of the prior art. Indeed, thanks to the hook-up device of the type described above, an electrical apparatus can be fixed to the rail, or removed from it, in a particularly quick and easy manner, at the same time managing to ensure safe-and reliable hooking-up.

It should also be observed that advantageously when both of the sliders 10, 11 are in advanced position, it is possible to apply the apparatus to the rail by acting with just one hand inserting the edge 3 of the rail below the hook-up tooth 7 keeping the apparatus inclined with respect to the rail and then rotating the apparatus making the hook-up tooth 8 interfere with the other edge 4 of the rail until such a tooth 8 snaps beyond the edge 4 of the rail.

Of course, a man skilled in the art can bring numerous modifications to the electrical apparatus described above, in order to satisfy contingent and specific requirements, these modifications and variants all being covered by the scope of protection as defined by the following claims.

## Claims

1. Modular electrical apparatus (1) comprising:
- a box-shaped body (5, 6);
- a hook-up device for removably fixing the box-shaped body (5, 6) to a rail (2), the hook-up device comprising a first (10) and a second slider (11) equipped with a respective hook-up tooth (7, 8) and slidably housed in respective seats provided in said box-shaped body, the sliders (10, 11) being adapted to be actuated to be moved between an advanced position and a withdrawn position, the hook-up device being adapted to take up a configuration hooked-up to the rail (2) when both of the sliders (10, 11) are in advanced position and an unhooked configuration when both of the sliders (10, 11) are in withdrawn position, said hook-up device comprising a simultaneous actuation mechanism (16, 12, 29) of the two sliders (10, 11) operating so that an actuation of the first slider (10) is such as to also cause the actuation of the second slider (11); said simultaneous actuation mechanism including elastic means (12) provided for pushing the second slider (11) into the advanced position and including a rotating thrusting member (29) adapted to rotate around a rotation axis (A-A) and to exert a thrusting force in contrast to the action of said elastic means (12) to bring the second slider (11) from the advanced position to the withdrawn position; **characterized in that**
said rotating thrusting member (29) is rotatably hinged about said rotation axis (A-A) to the first slider (10).

2. Modular electrical apparatus (1) according to claim 1, wherein the simultaneous actuation mechanism (16, 12, 29) comprises mechanical connection means (16) between the two sliders (10, 11) that extend between the first (10) and the second slider (11).

3. Modular electrical apparatus (1) according to claims 1 or 2, wherein the box-shaped body (5,6) includes an apparatus back intended to be placed over the rail (2) equipped with a recess (9) suitable for at least partially receiving the rail (2) and wherein the mechanical connection means (16) between the two sliders (10, 11) cross said recess (9) along a base wall (18)

4. Modular electrical apparatus (1) according to claim 2 or 3, wherein the mechanical connection means include a mechanical connection element (16) kinematically coupled with the first slider (10) and adapted to be moved in the opposite direction to the direction of movement of the first slider (10).

5. Modular electrical apparatus (1) according to any one of claims 2 to 4, wherein said mechanical connection means include a sliding bar (16).

6. Modular electrical apparatus (1) according to claim 5, wherein the bar (16) is made from sheet metal.

7. Modular electrical apparatus (1) according to claims 5 or 6, wherein the bar (16) includes two opposite end portions (16a, 16b) bent with respect to the main direction of extension of the bar (16) and provided for cooperating with the first (10) and the second slider (11), respectively.

8. Modular electrical apparatus (1) according to any one of claims 5 to 7 when dependent upon claim 3, wherein said base wall (19) has a recess (44) wherein said bar (16) is slidably received.

9. Modular electrical apparatus (1) according to claim 1, wherein the rotating thrusting member is a curved tooth (29) having a first end portion (40) hinged to the first slider (10) and a second free end portion (41).

10. Modular electrical apparatus (1) according to claim 9, also comprising means (30, 37) adapted to impart a rotary motion onto the curved tooth (29) following a linear movement of the first slider (10).

11. Modular electrical apparatus (1) according to claim 10, wherein the means adapted to impart rotary motion comprise a small block (30) firmly connected to the box-shaped body (5, 6) of the electrical apparatus (1), equipped with a projecting appendage (37) that in the passage of the first slider (10) from the advanced position to the withdrawn position interferes in abutment against a surface of the curved tooth (29) determining a rotation of the same.

## Patentansprüche

1. Modulares elektrisches Gerät (1), das aufweist:
- ein kastenförmiges Gehäuse (5, 6);
- eine Anhängevorrichtung zum trennbaren Befestigen des kastenförmigen Gehäuses (5, 6) an einer Schiene (2), wobei die Anhängevorrichtung einen ersten (10) und einen zweiten Schieber (11) aufweist, die jeweils mit einem Anhängezahn (7, 8) ausgestattet und verschiebbar in entsprechenden Sitzen untergebracht sind, die in dem kastenförmigen Gehäuse vorgesehen sind, wobei die Schieber (10, 11) vorgesehen bzw. ausgebildet sind, betätigt zu werden, um zwischen einer vorgerückten Stellung und einer eingefahrenen Stellung bewegt zu werden, wobei die Anhängevorrichtung so angepasst ist, dass sie eine an der Schiene (2) eingehakte Konfiguration einnimmt, wenn sich beide Schieber (10, 11) in der vorgerückten Stellung befinden, und eine ausgehakte Konfiguration, wenn sich beide Schieber (10, 11) in der eingefahrenen Stellung befinden, wobei die Anhängevorrichtung einen Simultanbetätigungsmechanismus (16, 12, 29) der beiden Schieber (10, 11) aufweist, der so funktioniert, dass eine Betätigung des ersten Schiebers (10) auch die Betätigung des zweiten Schiebers (11) bewirkt; wobei der Simultanbetätigungsmechanismus ein elastisches Glied (12), das dazu vorgesehen ist, den zweiten Schieber (11) in die ausgefahrene Stellung zu schieben und ein rotierendes Schiebeglied (29) enthält, das daran angepasst ist, um eine Drehachse (A-A) zu rotieren und eine dem elastischen Glied (12) entgegenwirkende Schiebekraft auszuüben, um den zweiten Schieber (11) aus der vorgerückten Stellung in die eingefahrene Stellung zu bringen;
**dadurch gekennzeichnet, dass**
das rotierende Schiebeglied (29) um die Drehachse (A-A) drehbar an dem ersten Schieber (10) befestigt ist.

2. Modulares elektrisches Gerät (1) nach Anspruch 1, wobei der Simultanbetätigungsmechanismus (16, 12, 29) ein mechanisches Verbindungsmittel (16) zwischen den beiden Schiebern (10, 11) aufweist, das sich zwischen dem ersten (10) und dem zweiten Schieber (11) erstreckt.

3. Modulares elektrisches Gerät (1) nach Anspruch 1 oder 2, wobei das kastenförmige Gehäuse (5, 6) eine über der Schiene (2) anzubringende Geräterückwand aufweist, die mit einer Vertiefung (9) versehen ist, die sich für die zumindest teilweise Aufnahme der Schiene (2) eignet, wobei das mechanische Verbindungsmittel (16) zwischen den beiden Schiebern (10, 11) die Vertiefung (9) entlang einer Bodenwand (18) überquert.

4. Modulares elektrisches Gerät (1) nach Anspruch 2 oder 3, wobei das mechanische Verbindungsmittel ein mechanisches Verbindungselement (16) einschließt, das mit dem ersten Schieber (10) kinematisch gekoppelt und daran angepasst ist, in die der Bewegungsrichtung des ersten Schiebers (10) entgegengesetzte Richtung bewegt zu werden.

5. Modulares elektrisches Gerät (1) nach einem der Ansprüche 2 bis 4, wobei das mechanische Verbindungsmittel eine Gleitschiene (16) aufweist.

6. Modulares elektrisches Gerät (1) nach Anspruch 5, wobei die Schiene (16) aus Blech besteht.

7. Modulares elektrisches Gerät (1) nach Anspruch 5 oder 6, wobei die Schiene (16) zwei gegenüberliegende Endabschnitte (16a, 16b) aufweist, die bezüglich der Hauptausdehnungsrichtung der Schiene (16) gebogen und dazu vorgesehen sind, mit dem ersten (10) bzw. dem zweiten Schieber (11) zusammenzuwirken.

8. Modulares elektrisches Gerät (1) nach einem der Ansprüche 5 bis 7 in Abhängigkeit von Anspruch 3, wobei die Bodenwand (19) eine Vertiefung (44) hat, in der die Schiene (16) verschiebbar aufgenommen wird.

9. Modulares elektrisches Gerät (1) nach Anspruch 1, wobei das rotierende Schiebeglied ein gekrümmter Zahn (29) mit einem drehbar am ersten Schieber (10) befestigten ersten Endabschnitt (40) und einem freien zweiten Endabschnitt (41) ist.

10. Modulares elektrisches Gerät (1) nach Anspruch 9, das außerdem eine Einrichtung (30, 37) aufweist, die daran angepasst ist, den gekrümmten Zahn (29) in eine Drehbewegung zu versetzen, die einer Linearbewegung des ersten Schiebers (10) folgt.

11. Modulares elektrisches Gerät (1) nach Anspruch 10, wobei die in eine Drehbewegung versetzende Einrichtung einen kleinen Block (30) aufweist, der fest mit dem kastenförmigen Gehäuse (5, 6) des elektrischen Geräts (1) verbunden und mit einem vorstehenden Anhängsel (37) ausgestattet ist, das beim Übergang des ersten Schiebers (10) aus der ausgefahrenen Position in die eingefahrene Position an eine Oberfläche des gekrümmten Zahns (29) anstößt und eine Drehung desselben bestimmt.

## Revendications

1. Appareil électrique modulaire (1) comprenant :
- un corps en forme de boîte (5, 6) ;
- un dispositif d'accrochage pour fixer de manière amovible le corps en forme de boîte (5, 6) sur un rail (2), le dispositif d'accrochage comprenant une première (10) et une deuxième glissière (11) équipées d'une dent d'accrochage (7, 8) respective et logées de manière coulissante dans des sièges respectifs prévus dans ledit corps en forme de boîte, les glissières (10, 11) étant adaptées pour être actionnées afin d'être positionnées entre une position avancée et une position retirée, le dispositif d'accrochage étant adapté pour prendre une configuration accrochée sur le rail (2) lorsque les deux glissières (10, 11) sont dans la position avancée et une configuration décrochée lorsque les deux glissières (10, 11) sont dans la position retirée, ledit dispositif d'accrochage comprenant un mécanisme d'actionnement simultané (16, 12, 29) des deux glissières (10, 11) fonctionnant de sorte qu'un actionnement de la première glissière (10) est tel qu'il provoque l'actionnement de la deuxième glissière (11); ledit mécanisme d'actionnement simultané comprenant des moyens élastiques (12) prévus pour pousser la deuxième glissière (11) dans la position avancée et comprenant un élément de poussée rotatif (29) adapté pour tourner autour d'un axe de rotation (A-A) et pour exercer une force de poussée en opposition à l'action desdits moyens élastiques (12) pour amener ladite deuxième glissière (11) de la position avancée à la position retirée ;
**caractérisé en ce que :**
ledit élément de poussée rotatif (29) est articulé de manière rotative, autour dudit axe de rotation (A-A), par rapport à la première glissière (10).

2. Appareil électrique modulaire (1) selon la revendication 1, dans lequel le mécanisme d'actionnement simultané (16, 12, 29) comprend des moyens de raccordement mécanique (16) entre les deux glissières (10, 11) qui s'étendent entre la première (10) et la deuxième glissière (11).

3. Appareil électrique modulaire (1) selon la revendication 1 ou 2, dans lequel le corps en forme de boîte (5, 6) comprend un dos d'appareil prévu pour être placé sur le rail (2) équipé d'un évidement (9) approprié pour recevoir au moins partiellement le rail (2) et dans lequel les moyens de raccordement mécanique (16) entre les deux glissières (10, 11) traversent ledit évidement (9) le long de sa paroi de base (18).

4. Appareil électrique modulaire (1) selon la revendication 2 ou 3, dans lequel les moyens de raccordement mécanique comprennent un élément de raccordement mécanique (16) couplé de manière cinématique avec la première glissière (10) et adapté pour être déplacé dans la direction opposée à la direction de mouvement de la première glissière (10).

5. Appareil électrique modulaire (1) selon l'une quelconque des revendications 2 à 4, dans lequel lesdits moyens de raccordement mécanique comprennent une barre coulissante (16).

6. Appareil électrique modulaire (1) selon la revendication 5, dans lequel la barre (16) est réalisée à partir d'une tôle.

7. Appareil électrique modulaire (1) selon la revendication 5 ou 6, dans lequel la barre (16) comprend deux parties d'extrémité opposées (16a, 16b) pliées par rapport à la direction principale d'extension de la barre (16) et prévues pour coopérer avec la première (10) et la deuxième glissière (11) respectivement.

8. Appareil électrique modulaire (1) selon l'une quelconque des revendications 5 à 7, lorsqu'elles dépendent de la revendication 3, dans lequel ladite paroi de base (19) a un évidement (44) dans lequel ladite barre (16) est reçue de manière coulissante.

9. Appareil électrique modulaire (1) selon la revendication 1, dans lequel l'élément de poussée rotatif est une dent incurvée (29) ayant une première partie d'extrémité (40) articulée par rapport à la première glissière (10) et une deuxième partie d'extrémité libre (41).

10. Appareil électrique modulaire (1) selon la revendication 9, comprenant également des moyens (30, 37) adaptés pour transmettre un mouvement rotatif sur la dent incurvée (29) suite à un mouvement linéaire de la première glissière (10).

11. Appareil électrique modulaire (1) selon la revendication 10, dans lequel les moyens adaptés pour transmettre le mouvement rotatif comprennent un petit bloc (30) fermement raccordé au corps en forme de boîte (5, 6) de l'appareil électrique (1), équipé avec un appendice en saillie (37) qui, dans le passage de la première glissière (10), de la position avancée à la position retirée, interfère en butée contre une surface de la dent incurvée (29), déterminant une rotation de cette dernière.
